Europäisches Patentamt

European Patent Office

Office européen des brevets

(19)

(11) Veröffentlichungsnummer: **0 152 638**
**B1**

(12) # EUROPÄISCHE PATENTSCHRIFT

(45) Veröffentlichungstag der Patentschrift:
26.11.86

(21) Anmeldenummer: 84201078.7

(22) Anmeldetag: 23.07.84

(51) Int. Cl.⁴: **E 03 F 5/10,** B 67 D 3/00,
B 01 D 25/30, B 65 G 65/23

(54) **An mindestens einem Träger aufgehängte Spülkippe.**

(30) Priorität: 03.02.84 CH 509/84

(43) Veröffentlichungstag der Anmeldung:
28.08.85 Patentblatt 85/35

(45) Bekanntmachung des Hinweises auf die Patenterteilung:
26.11.86 Patentblatt 86/48

(84) Benannte Vertragsstaaten:
AT BE CH DE FR GB IT LI LU SE

(56) Entgegenhaltungen:
CH-A-590 980
DE-A-3 208 920
US-A-1 704 437

(73) Patentinhaber: Anthonissen, Frits, Julianalaan 7,
NL- 2811 KT Reeuwijk (NL)

(72) Erfinder: Anthonissen, Frits, Julianalaan 7, NL- 2811
KT Reeuwijk (NL)

(74) Vertreter: Gachnang, Hans Rudolf, Algisserstrasse
33, CH- 8500 Frauenfeld (CH)

EP 0 152 638 B1

## Beschreibung

Die Erfindung betrifft eine an mindestens einem Träger aufgehängte Spülkippe gemäss Oberbegriff des Patentanspruches 1.

Spülkippen werden in Kläranlagen zum Reinigen von Anlageteilen, beispielsweise Becken, Rechen und Sieben verwendet. Mit einer Spülkippe kann kurzzeitig ein grosses Volumen Wasser in Form eines Schwalls auf eine vorgegebene Fläche geschüttet werden, unnverunreiniougen durch mechanischen Einfluss abzulösen und anschliessend fortzuschwemmen.

Die bekannten Spülkippen sind an deren Endplatten an Trägern aufgehängt (CB-PS 590 980 und DE-A-3,208,920).

Bei diesen Spülkippen beansprucht die Aufhängung erheblich viel Raum, der nicht mehr für Spülwasser nutzbar ist, wodurch insbesondere bei sehr schmalen Becken oder Sieben die seitlichen Bereiche schlechter durchspült werden. Bei sehr langen Behältern tritt bei den bekannten Aufhängungen eine starke Durchbiegung ein. Dies bedeutet einerseits, dass der Behälter verstärkt werden muss und anderseits kann ein durchhängender Behälter nicht bis zum theoretisch möglichen Volumen gefüllt werden. Des weiteren wandert der Schwerpunkt in unberechenbarer Weise, so dass das Kippen nicht mehr im vorbestimmten Zeitpunkt erfolgt.

Die Aufgabe der Erfindung besteht darin, die Nachteile der bekannten Kippen zu beheben, bzw. die Kippe derart zu gestalten, dass sich deren Form während des Füllens nicht wesentlich ändert, und zwar unabhängig von der Länge der Kippe.

Nach der Erfindung werden diese Aufgaben gemäss den kennzeichnenden Merkmalen des Patentanspruches 1 gelöst. Weitere vorteilhafte Ausführungsformen sind in den abhängigen Ansprüchen beschrieben. Es zeigen:

Figur 1: Einen Schnitt durch eine Spülkippe entlang Linie 1 - 1 in Figur 2,

Figur 2: Eine Ansicht in Richtung des Pfeiles A in Figur 1,

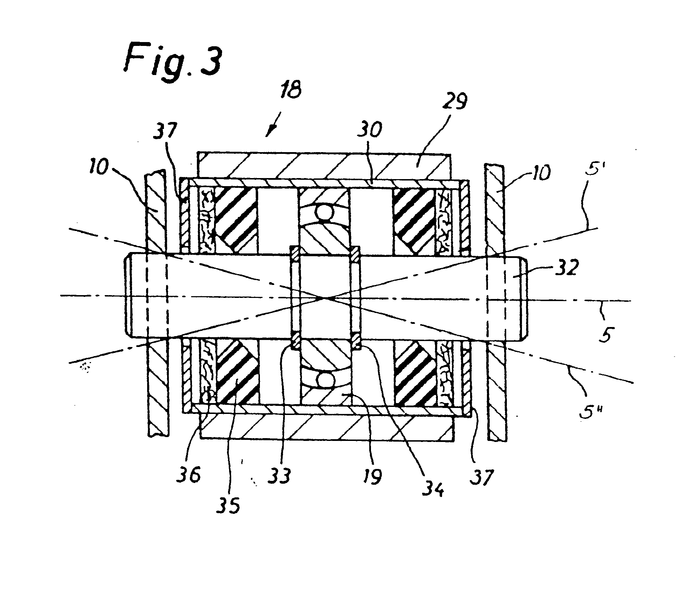

Figur 3: Einen Längsschnitt durch ein Pendellager für die Spülkippe nach Figur 1.

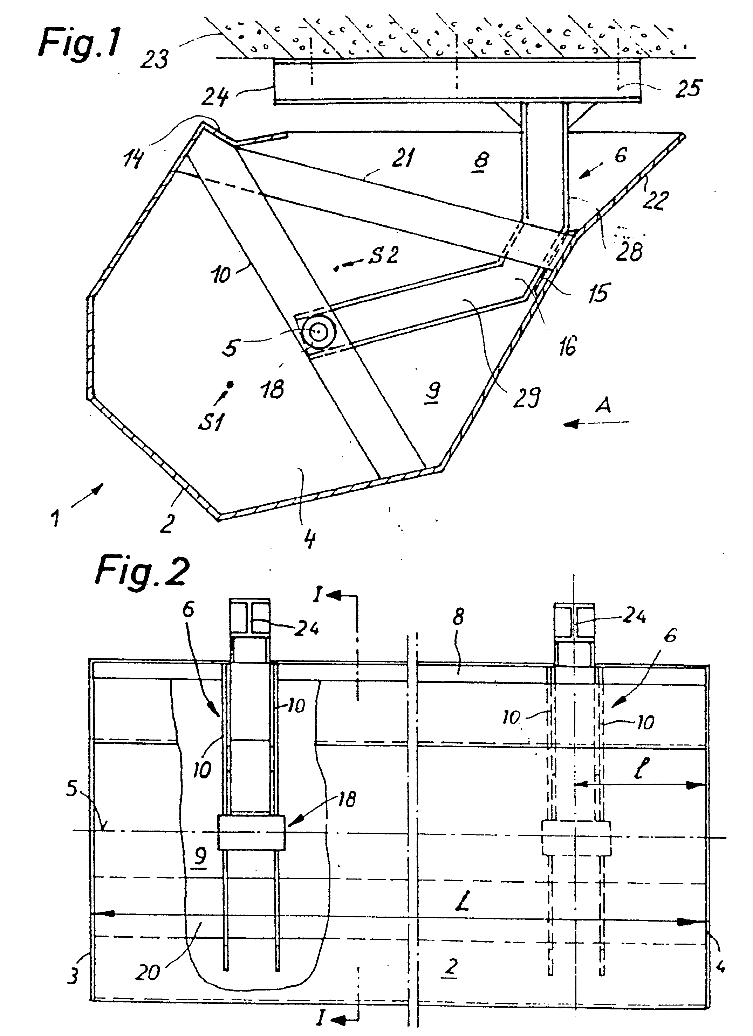

In den Figuren 1 und 2 ist eine Spülkippe mit einem Behälter 1 gezeigt, der aus einem Mantel 2 und diesen seitlich abschliessenden Endplatten 3,4 besteht. Der Behälter 1 ist um eine Achse 5 schwenkbar aufgehängt. In der Ruhestellung nach Figur 1 ist der Schwerpunkt S1 des leeren Behälters 1 links von der Achse 5 und der Gleichgewichtszustand ist stabil. Wird der Behälter 1 mit Spülwasser gefüllt, so wandert der gemeinsame Schwerpunkt S2 von Behälter 1 und Inhalt allmählich auf die rechte Seite der Achse 5, so dass eine im Uhrzeigersinn verlaufende Schwenkbewegung des Behälters 1 und damit das Ausleeren des Spülwassers erfolgt. Nach dem Entleeren schwenkt der Behälter 1 in die Ausgangslage zurück.

Der Behälterinnenraum 9 ist von mit dem Mantel 2 verbundenen Traggliedern 10 zum Beispiel in Gestalt von Flachprofilen durchsetzt. Weitere Flachprofile 21 können sich zum Ausgussschnabel 22 erstrecken und den Behälter 1 verstärken.

An einem oder mehreren Trägern 6 ist der Behälter 1 an der Decke 23 eines Anlagegebäudes aufgehängt. Mit einem am Träger 6 angeschweissten Stahlprofil 24 und Bolzen 25 ist dieser mit der Decke starr verbunden. Selbstverständlich kann das Stahlprofil 24 auch in die Decke 23 eingegosen sein.

Der Träger 6 besteht aus einem ersten, in der Zeichnung vertikal verlaufenden Abschnitt 25, einem dazu schiefwinklig verlaufenden zweiten Abschnitt 16 und einem noch stärker geneigten dritten Abschnitt 29, an dessen Ende ein Pendellager 18 angebracht ist.

Durch die gekrümmte Form des Trägers 6 erreicht man, dass dieser von einer aufrechten leeren Stellung in eine gekippte Stellung schwenken kann, ohne dass durch Einschnitte ein Inhaltsverlust und eine Durchbiegung eintreten können.

Zwecks Abstützung des durch die versetzt zum Abschnitt 28 liegende Schwenkachse 5 am Träger 6 entstehenden Momentes D wird das Stahlprofil 24 bis über die Schwenkachse 5 hinausgeführt.

In Abhängigkeit von der Länge L des Behälters 1 können mehr ala ein Träger 6 notwendig sein. Werden beispielsweise zwei Träger 6 vorgesehen, so sind diese in einem Abstand l von circa L/5 von den Endplatten 3,4 anzubringen, um die geringste Durchbiegung zu erhalten.

Der Abschnitt 16 dient zum Festlegen der Endstellung des Behälters 1 vor und nach der Schwenkbewegung. Am Mantel 2 ist ein Schwenkbegrenzungsglied 14 und diesem gegenüber eine Verstärkungsplatte 15 sngebracht. Die Neigung des Schwenkbegrenzungsgliedes 14 und der Platte 15 entsprechen derjenigen des Abschnittes 16, wenn sie in Anlage mit dem Abschnitt 16 gelangen.

Wenn der gefüllte Behälter 1 im Uhrzeigersinn um die Achse 5 schwenkt, wird die Drehung durch das Schwenkbegrenzungsglied 14 unterbrochen, so dass durch die asymmetrische Gewichtsverteilung im Behälter 1 dieser nach der Entleerung zurückdrehen kann.

In der Figur 5 ist das in einer Büchse 30 eingesetzte Pendellager 18 am Ende des Abschnittes 29 dargestellt. Das Pendellager 18 vermag allfällig vorhandcne Ungenauigkeiten des Behälters 1 sowie die geringen, nicht vermeidbaren Durchbiegungen aufzunehmen.

Durch ein Wälzlager 19 verläuft ein Drehzapfen 32, der an den Traggliedern 10 befestigt ist. Das Wälzlager 19 ist durch Sprengrinne 33, 34 auf dem Drehzapfen 32 gesichert. Seitlich des Wälzlagers 19 befinden sich Dichtungsringe 35 und allenfalls noch je ein Filzring 36. Den seitlichen Abschluss des Pendellagers 18 bilden Deckel 57. Die strichpunktiert dargestellten Achsen 5' und 5" deuten in übertriebenem Maßstab die Abweichungen von der geometrischen Achse 5 an, die durch das Lager 18 aufgenommen werden können.

## Patentansprüche

1. Spülkippe in Gestalt eines langgestreckten, oben offenen, um eine horizontale Achse drehbar angeordneten und an der Decke eines Anlagengebäudes aufgehängten Behälters zur Erzeugung eines Wasserschwalls, dadurch gekennzeichnet, dass ein Träger (6) von oben in einem Abstand (I) von den den Behälter (1) seitlich abschliessenden Endplatten (3,4) in dessen Innenraum (9) ragt und dort an der Schwenkachse (5) angelenkt ist, und dass die Schwenkachse (5) an einem im Innenraum (9) angebrachten Tragglied (10) angeordnet ist.

2. Spülkippe nach Anspruch 1, dadurch gekennzeichnet, dass der Träger (6) aus einem im wesentlichen vertikal angeordneten, die Ausgussöffnung (8) des Behälters (1) durchdringenden Abschnitt (25) und einem gegen die Borizontale geneigten Abschnitt (29), an dessen Ende die Schwenkachse (5) angelenkt ist, besteht.

3. Spülkippe nach Anspruch 2, dadurch gekennzeichnet, dass zwischen den Abschnitten (28 und 29) ein dritter Abschnitt (16) eingesetzt ist, dessen untenliegende Oberfläche im wesentlichen parallel zum ausgusseitigen Teil des Behälters (1) angeordnet ist und als Anschlagfläche für den Behälter (1) in aufrechter Stellung dient, und dass dessen obenliegende Oberfläche als Anschlagfläche beim Kippen für den dem ausgusseitigen Teil des Behälters (1) gegenüberliegenden Teil (14) dient.

4. Spülkippe nach Anspruch 2, dadurch gekennzeichnet, dass am Abschnitt (25) des Trägers (6) ein horizontal liegender Abschnitt (24) in Gestalt eines Stahlträgers angeschweisst ist, der mit der Decke (23) verbunden ist, und der zwecks Abstützung des am Träger (6) entstehenden Momentes (D) bis über die Schwenkachse (5) hinaus reicht.

5. Spülkippe nach einem oder mehreren der Ansprüche 1 bis 4, dadurch gekennzeichnet, dass der Behälter (1) mittels eines Pendellagers (18) mit dem Träger (6) verbunden ist.

## Claims

1. Pivotal sluicing means in the form of an elongate container for producing a surge of water, the container being open at its upper end, being disposed so as to be rotatable about a horizontal axis and being mounted on the ceiling of a structural building, characterised in that a support member (6) extends from above into the interior (9) of the container (1) at a spacing (I) from the end panels (3, 4) which laterally close the container, and is pivotally connected thereto the pivot axle (5), and in that the pivot axle (5) is disposed on a support member (70) mounted in the interior (9).

2. Pivotal sluicing means according to claim 7, characterised in that the support member (6) comprises a section (28), which extends substantially vertically end passes through the discharge opening (B) of the container (7), and a section (29) which is inclined towards the horizontal and has the pivot axle (5) pivotally connected to its end.

3. Pivotal sluicing means according to claim 2, characterised in that a third section (76) is inserted between the sections (28 and 29), the lower surface of the third section extending substantially parallel to the portion of the container (7) at the discharge end and serving as a stop surface for the container (7) in a vertical position, and in that the upper surface of the third section serves as a stop surface during tilting for the portion (74) situated opposite the portion of the container (7) at the discharge end.

4. Pivotal sluicing means according to claim 2, characterised in that a horizontally extending section (24), in the form of a steel girder, is welded to the section (28) of the support member (6), is connected to the ceiling (23) and extends beyond the pivot axle (5) for the purpose of supporting the moment (0) produced at the support member (6).

5. Pivotal sluicing means according to one or more of claims 1 to 4, characterised in that the container (7) is connected to the support member (6) by means of a pivot bearing (78).

## Revendications

1. Réservoir basculant, destiné à provoquer l'afflux d'une masse d'eau et ayant la forme d'un récipient allongé, ouvert à la partie supérieure, monté de façon à pouvoir tourner autour d'un axe horizontal et suspendu au toit du bâtiment d'une installation, caractérisé en ce qu'une poutrelle (6) pénètre par le haut dans le volume intérieur (9) du récipient (1), à une distance (I) des plaques d'extrémité (3, 4) qui obturent celui-ci latéralement, et en ce que l'axe de basculement (5) y est disposé sur un support (10) placé dans le volume intérieur (9).

2. Réservoir basculant selon la revendication 1, caractérisé en ce que la poutrelle (6) est constituée par une section (25) disposée en substance verticalement et traversant l'ouverture de déversement (8) du récipient (1) et par une section (29), inclinér par rapport à l'horizontale, à l'extrémité de laquelle est articulé l'axe de basculement (5).

3. Réservoir basculant selon la revendication 2, caractérisé en ce qu'entre les susdites sections (28 et 29) est intercalée une troisième section (16) dont la surface inférieure est disposée en substance parallèlement à la partie du récipient (1) située du côté du déversement et sert de face de butée au récipient (1) en position redressée et dont la surface supérieure sert de face de butée, lors du basculement, à la partie (14) du récipient (1) opposée à la partie de celui-ci qui est située du côté du déversement.

4. Réservoir basculant selon la revendication 2, caractérisé en ce que la section (28) de la poutrelle (6) est soudée à une section horizontale (24) formée par une poutrelle d'acier qui est fixée au toit (23) et qui, en vue d'absorber le moment (D) exercé sur la poutrelle (6), s'étend jusqu'au delà de l'axe de basculement (5).

5. Réservoir basculant selon l'une ou plusieurs des revendications l à 4, caractérisé en ce que le récipient (1) est relié à la poutrelle (6) à l'aide d'un palier oscillant (18).

Fig.1

Fig.2

Fig.3